# EUROPEAN PATENT SPECIFICATION

(11) **EP 2 653 507 B1**
(45) Date of publication and mention of the grant of the patent: **16.09.2015**
(21) Application number: 13164185.4
(22) Date of filing: 17.04.2013
(51) Int. Cl.: C09D 5/00

(54) **Corrosion-proof aluminum material and method for producing the same**
Korrosionsfestes Aluminiummaterial und Verfahren zu seiner Herstellung
Matériau d'aluminium résistant à la corrosion et son procédé de production

(30) Priority: 19.04.2012 JP 2012095713
(43) Date of publication of application: 23.10.2013
(73) Proprietor: Hitachi, Ltd., Chiyoda-ku, Tokyo 100-8280 (JP)
(72) Inventor: Mabuchi, Katsumi, Tokyo 100-8220 (JP)
(74) Representative: Beetz & Partner mbB

(56) References cited:
- EP-A1- 1 524 332
- EP-A2- 1 130 131
- US-B1- 6 605 365

## Description

### BACKGROUND OF THE INVENTION

### Field of the Invention

The present invention relates to a corrosion-proof aluminum material and a method for producing the same.

### Background Art

As a surface treatment for improving the corrosion resistance and pitting corrosion resistance of a metal material, a chromate treatment using hexavalent chromium such as a chromate or a bichromate is known. However, recently, from the viewpoint of environmental problems, a surface treatment using hexavalent chromium is regulated. Therefore, the development of a chromium-free surface treatment technique without using hexavalent chromium has been energetically performed.

As the chromium-free surface treatment technique, a method using a silane coupling agent having a sulfur atom has been developed. JP-T-2002-519505 discloses a method for improving corrosion resistance by treating a metal surface, including (a) providing a metal surface and (b) applying a treatment solution to the metal surface. The treatment solution contains at least one type of bifunctional polysulfur silane which has been at least partially hydrolyzed.

JP-T-2004-523353 discloses a treatment method for improving the corrosion resistance of a metal, including bringing a metal into contact with a treatment solution containing a mercapto-substituted silane. The mercapto-substituted silane may be a multifunctional mercapto-substituted silane. The metal can be selected from aluminum and an aluminum alloy.

As another chromium-free surface treatment technique, JP-A-2004-3019 discloses a method for producing a chemical coating film which does not contain hexavalent chromium and provides at least corrosion resistance by a treatment with yellow chromate containing hexavalent chromium, wherein a metal surface is treated with a solution containing at least one trivalent chromium chelate complex, the trivalent chromium in the chelate complex is present in the solution at a concentration of from 5 to 100 g/L, and the trivalent chromium chelate complex has a higher rate of ligand substitution than the rate of fluoride substitution of a trivalent chromium-fluoro complex.

As described above, various chromium-free surface treatment techniques have been developed. However, known chromium-free surface treatment techniques still have some problems. For example, the method using a silane coupling agent having a sulfur atom disclosed in JP-T-2002-519505 and JP-T-2004-523353 has a problem that satisfactory performance in terms of corrosion resistance and pitting corrosion resistance cannot be obtained. Further, for example, the method using a trivalent chromium chelate complex disclosed in JP-A-2004-3019 has a problem that although corrosion resistance and pitting corrosion resistance comparable to those of a chromate coating film can be obtained, the thickness of the coating film layer reaches several micrometers, and therefore the function of the surface of a metal base material is lost. In addition, in the method using a trivalent chromium chelate complex, the treatment is performed under an acidic condition, and therefore, if the method is applied to a metal base material in the form of a thin film, a problem arises that the metal base material disappears during the treatment.

US 6,605,365 B1 discloses a pigmented alkoxyzirconium sol comprising an organozirconium compound, an organosilane and a pigment. An aluminum alloy surface is coated with the sol which is heated and dried at 230 °F. The obtained coating of a mixed zirconium/silicon oxide may serve for applying a paint and provide corrosion resistance. An example for the organosilane compound is 3-mercaptopropyltrimethoxysilane.

EP 1 524 332 A1 discloses a surface-treating solution comprising a water-dispersible resin and/or a watersoluble resin, a silane coupling agent and a phosphoric and/or a hexafluoro-metal acid. The solution is applied to an aluminum-plated steel sheet. The silane coupling agent may consist of 3-mercaptopropyltrimethoxysilane. The surface-treating solution is used for electronic appliances for household use, construction materials and automobile parts.

EP 1 130 131 A2 discloses a nonchromate metallic surface-treating agent suited for aluminum-coated steel comprising a silane coupling agent, water-dispersible silica and a zirconium compound and/or a titanium compound. The treated surface is provided with a top coat. The silane coupling agent may consist in 3-mercaptopropyltrimethoxysilane. The surface-treating agent has a corrosion resistance-improving effect. The surface-treating agent imparts high processability, deep drawability and corrosion resistance to the aluminum-coated steel.

In light of this, an object of the invention is to provide a surface treatment technique for a metal base material which can be applied also to a metal base material in the form of a thin film, can substantially maintain the function of the surface of the metal base material, and provides excellent corrosion resistance and pitting corrosion resistance.

### SUMMARY OF THE INVENTION

In order to achieve the above object, a corrosion-proof aluminum material of the invention includes: a metal base material composed of aluminum or an aluminum alloy; and a coating film layer formed from a silane coupling agent having a sulfur atom and disposed on a surface of the metal base material, wherein the ratio of the concentration of sulfur atom in the surface of the coating film layer to the concentration of aluminum atom is 0.4 or more. Further, a method for producing a corrosion-proof aluminum material of the invention includes a coating film layer forming step in which a metal base material composed of aluminum or an aluminum alloy is treated with a coating film forming agent containing a silane coupling agent having a sulfur atom to form a coating film layer on a surface of the metal base material.

According to the invention, it becomes possible to provide a surface treatment technique for a metal base material which can be applied also to a metal base material in the form of a thin film, can substantially maintain the function of the surface of the metal base material, and provides excellent corrosion resistance and pitting corrosion resistance.

Objects, configurations, and effects other than those described above will be apparent through the following description of embodiments.

### BRIEF DESCRIPTION OF THE DRAWINGS

Fig. 1 is a cross-sectional view showing one embodiment of a corrosion-proof aluminum material of the invention.
Fig. 2 is a process chart showing one embodiment of a method for producing a corrosion-proof aluminum material of the invention.
Fig. 3 is a graph showing a polarization curve of Comparative Example 1.
Fig. 4 is a graph showing a relationship between an immersion time in a coating film forming agent and a corrosion current density (µA/cm²) in the preparation of an Al-sputtered film having a coating film layer formed thereon of any of Examples 1 to 6.
Fig. 5 is a graph showing a relationship between an immersion time in a coating film forming agent and a pitting potential (vs. Ag/AgCl saturated KCl) in the preparation of an Al-sputtered film having a coating film layer formed thereon of any of Examples 1 to 6.
Fig. 6 is a graph showing a relationship between a pitting potential and a S/Al ratio in the preparation of an Al-sputtered film having a coating film layer formed thereon of any of Examples 1 to 6.

### DESCRIPTION OF THE PREFERRED EMBODIMENTS

Hereinafter, preferred embodiments of the invention will be described in detail.

### 1. Corrosion-Proof Aluminum Material

The invention relates to a corrosion-proof aluminum material including a metal base material and a coating film layer disposed on a surface of the metal base material.

The "corrosion-proof property" as used herein refers to corrosion resistance and pitting corrosion resistance of a metal in a corrosive environment. The "corrosive environment" refers to an air environment or an aqueous environment, and examples thereof include an acidic environment, an alkaline environment, a chloride environment, and a combination thereof. The above-described corrosive environment is created by, for example, decomposing and/or dissolving a variety of substances, air pollutants, etc. present around a metal. The "corrosion resistance" refers to resistance against general corrosion of a metal, and the "pitting corrosion resistance" refers to resistance against pitting corrosion on a surface of a metal. The corrosion resistance can be evaluated, for example, on the basis of a corrosion current density determined by applying a current to a metal in a 3.5 mass% NaCl aqueous solution and measuring a potential-current curve (polarization curve), and then applying the Tafel equation to the obtained polarization curve. Meanwhile, the pitting corrosion resistance can be evaluated, for example, on the basis of a pitting potential which is a potential at which a current density suddenly increases in the polarization curve. Alternatively, the pitting corrosion resistance may be evaluated by immersing a metal in a 3.5 mass% NaCl aqueous solution for a given period of time, and then taking out the metal from the aqueous solution and observing pitting corrosion occurring on the surface of the metal using a light microscope.

The "metal base material" as used herein refers to a metal material to be subjected to a corrosion-proof treatment of the invention. Specifically, it refers to a metal material composed of aluminum or an aluminum alloy.

The present inventors found that by treating a metal base material composed of aluminum or an aluminum alloy with a silane coupling agent having a sulfur atom, a coating film layer was formed on a surface of the metal base material. The coating film layer formed with the silane coupling agent having a sulfur atom has high corrosion resistance and pitting corrosion resistance, and also has high heat resistance, solvent resistance, slidability, and smoothness. Therefore, by applying the corrosion-proof treatment of the invention to a metal material composed of aluminum or an aluminum alloy, for example, the general corrosion resistance and pitting corrosion resistance on the surface of a magnetic disk substrate can be improved. Further, the corrosion-proof treatment of the invention not only can form a smooth and dense coating film with less defects, but also can substantially maintain the function of the surface of the metal material. Therefore, for example, in the case where the corrosion-proof aluminum material of the invention is used for a magnetic disk substrate, the deterioration of the magnetic recording property due to an increase in the magnetic distance between a magnetic head and a magnetic disk substrate can be prevented. Further, for example, in the case where the corrosion-proof aluminum material of the invention is used for a sensor material, the sensing function can be substantially maintained.

The silane coupling agent having a sulfur atom is preferably a compound described below.

The ratio of the concentration of sulfur atom in the surface of the coating film layer to the concentration of aluminum atom is preferably 0.4 or more, more preferably 0.5 or more. If the ratio of the concentration of sulfur atom to the concentration of aluminum atom in an aluminum material having a coating film formed thereon is less than 0.4, not only is the range of the corrosion current density and/or the pitting potential substantially the same as that of an aluminum material having no coating film formed thereon, but also pitting corrosion occurs in a few days in a corrosive environment, and therefore, such a ratio is not preferred. Accordingly, when the ratio of the concentration of sulfur atom to the concentration of aluminum atom is in the above-described range, a high corrosion-proof property can be exhibited.

Incidentally, although not limited thereto, the ratio of the concentration of sulfur atom to the concentration of aluminum atom in the aluminum material having the coating film formed thereon can be determined, for example, as follows: the composition and the binding state of the coating film layer formed with the silane coupling agent having a sulfur atom are analyzed by X-ray photoelectron spectroscopy (XPS) (X-ray source: Al-Kα, tube voltage: 15 kV, tube current: 15 mA), and then, peaks are divided and at the same time, a waveform analysis is performed using a sensitivity coefficient so that the concentration of aluminum (Al) atom and the concentration of sulfur (S) atom in the coating film layer are determined, whereby the ratio thereof (S/Al (at%)) can be calculated.

The corrosion-proof aluminum material of the invention preferably has a pitting potential in a corrosive environment in a range exceeding the pitting potential of the aluminum material having no coating film formed thereon. For example, the pitting potential thereof in a 3.5 mass% NaCl aqueous solution is preferably -500 mV or more versus a silver-silver chloride electrode (saturated KCl). If the pitting potential thereof is less than -500 mV, not only is the range of the pitting potential substantially the same as that of an aluminum material having no coating film formed thereon, but also pitting corrosion occurs in a few days in a corrosive environment, and therefore, such a pitting potential is not preferred. Accordingly, when the pitting potential thereof is in the above-described range, high pitting corrosion resistance can be exhibited.

Incidentally, although not limited thereto, the pitting potential of the aluminum material having the coating film formed thereon in a corrosive environment can be determined, for example, as follows: the potential-current curve (polarization curve) of the aluminum material in a 3.5 mass% NaCl aqueous solution is measured using a potentiostat, and a potential at which a current density suddenly increases in the polarization curve is determined to be the pitting potential.

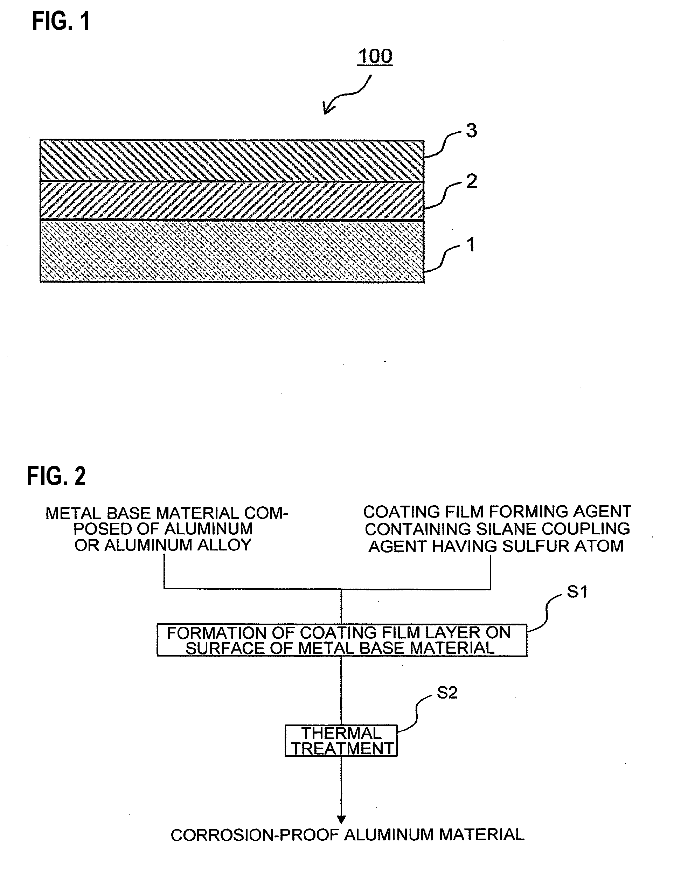

Fig. 1 is a cross-sectional view showing one embodiment of a corrosion-proof aluminum material of the invention. As shown in Fig. 1, a corrosion-proof aluminum material 100 of the invention includes a metal base material 1 composed of aluminum or an aluminum alloy and a coating film layer 3 formed with a silane coupling agent having a sulfur atom and disposed on a surface of the metal base material.

In the corrosion-proof aluminum material 100, a primer layer 2 composed of an oxide or a hydroxide of the metal base material may be further provided between the metal base material 1 and the coating film layer 3 as needed. In this case, the thickness of the primer layer 2 is preferably in a range exceeding the thickness of a native oxide of the metal base material 1. The primer layer 2 can be formed by performing a coating film layer forming step using a coating film forming agent containing an oxidizing agent or through an electrolysis treatment in a method for producing a corrosion-proof aluminum material described below. The "native oxide" as used herein refers to an oxide of a metal base material formed by oxidizing the metal base material in an air environment or an aqueous environment. For example, when the thickness of the native oxide of the metal base material 1 is in a range of from 20 to 50 Å, the thickness of the primer layer 2 is preferably 80 Å or more, more preferably in a range of from 80 to 1000 Å, and particularly preferably in a range of from 80 to 200 Å. If the thickness of the primer layer 2 is in the above-described range, the pitting potential in a corrosive environment falls within a range exceeding the pitting potential of an aluminum material having no coating film formed thereon, and therefore, such a thickness is preferred. Accordingly, by further providing the primer layer having a thickness in a range exceeding the thickness of a native oxide of the metal base material, the corrosion-proof aluminum material of the invention can exhibit high pitting corrosion resistance.

Incidentally, although not limited thereto, the thickness of the primer layer composed of an oxide or a hydroxide of the metal base material, and the thickness of a native oxide of the metal base material can be determined, for example, by XPS or SIMS measurement.

### 2. Method for Producing Corrosion-Proof Aluminum Material

The invention also relates to a method for producing the above-described corrosion-proof aluminum material.

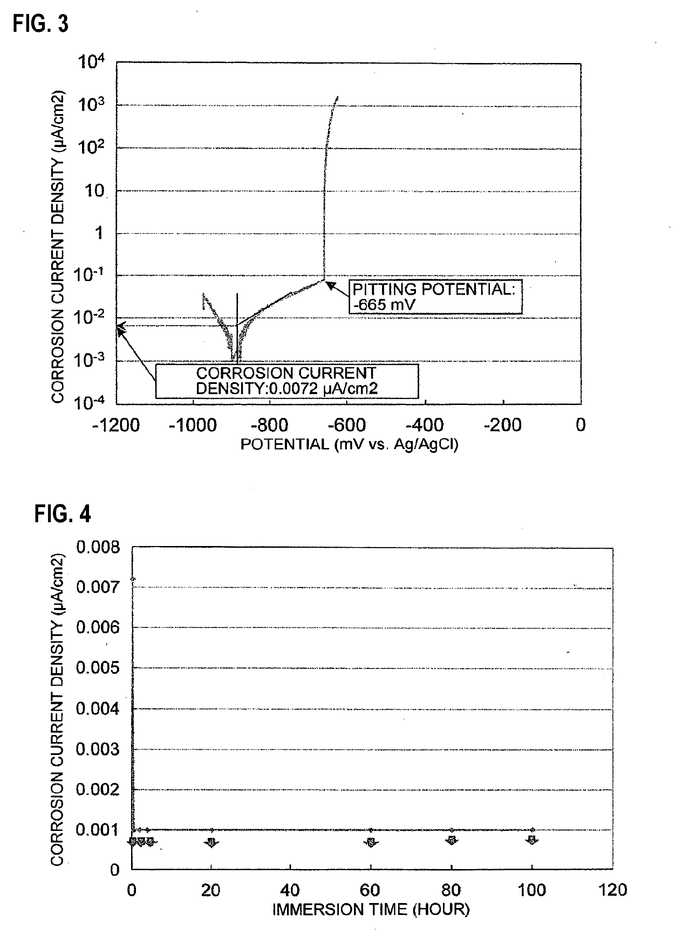

Fig. 2 is a process chart showing one embodiment of a method for producing a corrosion-proof aluminum material of the invention. Hereinafter, with reference to Fig. 2, a preferred embodiment of the method of the invention will be described in detail.

### 2-1. Coating Film Layer Forming Step

The method of the invention includes a coating film layer forming step (Step S1) in which a coating film layer is formed on a surface of the metal base material by treating the metal base material with a coating film forming agent.

The metal base material to be used in this step is preferably a metal base material composed of aluminum or an aluminum alloy described above.

The coating film forming agent to be used in this step contains a silane coupling agent having a sulfur atom. The silane coupling agent having a sulfur atom is preferably selected from the group consisting of at least one type of bifunctional polysulfur silane represented by the formula I: 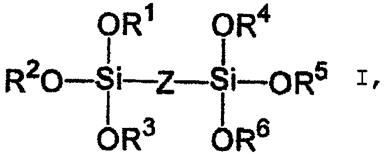 at least one type of multifunctional mercapto-substituted silane represented by the formula II: 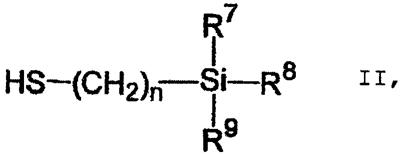 and at least one type of thioester compound represented by the formula III: 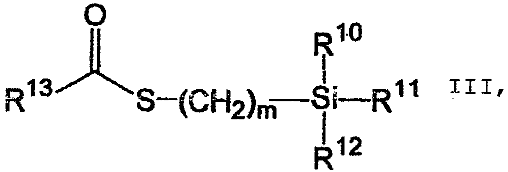 and a mixture thereof.

In the bifunctional polysulfur silane represented by the formula I, R¹ to R⁶ are each independently preferably a group selected from the group consisting of alkyl and acetyl, more preferably a group selected from the group consisting of linear or branched C₁-C₆ alkyl and acetyl, further more preferably a group selected from the group consisting of methyl, ethyl, propyl, isopropyl, butyl, isobutyl, sec-butyl, t-butyl, and acetyl, and particularly preferably methyl or ethyl.

In the formula I, Z is -Sₓ- or -Q¹-Sₓ-Q²-, wherein x is preferably an integer of 2 to 9, more preferably 4, and Q¹ and Q² are each independently preferably a group selected from the group consisting of a divalent aliphatic group and an aromatic group, more preferably a group selected from the group consisting of linear or branched C₁-C₆ alkylene, linear or branched C₂-C₆ alkenylene, linear or branched C₂-C₆ alkynylene, and phenylene, and particularly preferably ethylene, n-propylene, or n-butylene. The linear or branched C₁-C₆ alkylene, linear or branched C₂-C₆ alkenylene, and linear or branched C₂-C₆ alkynylene may be interrupted with one or more phenylene groups. Further, the above-described groups may be substituted with one or more amino groups.

A particularly preferred bifunctional polysulfur silane represented by the formula I is selected from the group consisting of bis(3-triethoxysilylpropyl)-tetrasulfide, bis(3-triethoxysilylpropyl)disulfide, bis(2-triethoxysilylethyl)tetrasulfide, bis(4-triethoxy-silylbutyl)disulfide, bis(3-trimethoxysilylpropyl)tetrasulfide, and bis(2-trimethoxysilylethyl)disulfide, and a mixture thereof.

In the multifunctional mercapto-substituted silane represented by the formula II, n is preferably an integer of 0 to 10, more preferably 2 or 3; R⁷ is preferably alkoxy, more preferably linear or branched C₁-C₆ alkoxy, further more preferably a group selected from the group consisting of methoxy, ethoxy, propoxy, isopropoxy, butoxy, isobutoxy, sec-butoxy, and t-butoxy, and particularly preferably methoxy or ethoxy; and R⁸ and R⁹ are each independently preferably hydrogen or a group selected from the group consisting of alkyl and alkoxy, more preferably hydrogen or a group selected from the group consisting of linear or branched C₁-C₆ alkyl and linear or branched C₁-C₆ alkoxy, further more preferably hydrogen or a group selected from the group consisting of methyl, ethyl, propyl, isopropyl, butyl, isobutyl, sec-butyl, t-butyl, methoxy, ethoxy, propoxy, isopropoxy, butoxy, isobutoxy, sec-butoxy, and t-butoxy, and particularly preferably methoxy or ethoxy.

A particularly preferred multifunctional mercapto-substituted silane represented by the formula II is selected from the group consisting of 3-mercaptopropyltrimethoxysilane, 3-mercaptopropyltriethoxysilane, 3-mercaptopropylmethyldimethoxysilane, and 2-mercaptoethyltriethoxysilane, and a mixture thereof.

In the thioester compound represented by the formula III, m is preferably an integer of 0 to 10, more preferably 3; R¹⁰ is preferably alkoxy, more preferably linear or branched C₁-C₆ alkoxy, further more preferably a group selected from the group consisting of methoxy, ethoxy, propoxy, isopropoxy, butoxy, isobutoxy, sec-butoxy, and t-butoxy, and particularly preferably methoxy or ethoxy; R¹¹ and R¹² are each independently preferably hydrogen or a group selected from the group consisting of alkyl and alkoxy, more preferably hydrogen or a group selected from the group consisting of linear or branched C₁-C₆ alkyl and linear or branched C₁-C₆ alkoxy, further more preferably hydrogen or a group selected from the group consisting of methyl, ethyl, propyl, isopropyl, butyl, isobutyl, sec-butyl, t-butyl, methoxy, ethoxy, propoxy, isopropoxy, butoxy, isobutoxy, sec-butoxy, and t-butoxy, and particularly preferably methoxy or ethoxy; R¹³ is preferably alkyl, more preferably linear or branched C₁-C₈ alkyl, further more preferably a group selected from the group consisting of methyl, ethyl, propyl, isopropyl, butyl, isobutyl, sec-butyl, t-butyl, pentyl, hexyl, heptyl, and octyl, and particularly preferably ethyl, heptyl, or octyl.

A particularly preferred thioester compound represented by the formula III is selected from the group consisting of 3-octanoylthio-1-propyltriethoxysilane, and 3-propionylthio-1-propyltrimethoxysilane, and a mixture thereof.

In this step, the coating film forming agent containing a silane coupling agent having a sulfur atom may contain one of the above-described compounds, and may contain a plurality of the compounds in the form of a mixture.

The coating film forming agent to be used in this step contains the above-described silane coupling agent having a sulfur atom at a concentration of preferably from 0.05 to 10 mass%, more preferably from 0.2 to 5 mass% with respect to the total mass of the coating film forming agent.

For example, in the case where this step is performed using the coating film forming agent containing bis(3-triethoxysilylpropyl)tetrasulfide at the above-described concentration, the compound forms a strong coordinate bond with aluminum or an aluminum alloy of the metal base material and also bis(3-triethoxysilylpropyl)tetrasulfide molecules form a covalent bond. Therefore, a coating film layer formed with the coating film forming agent has high corrosion resistance and pitting corrosion resistance, and also has high heat resistance, solvent resistance, slidability, and smoothness, and thus, such a configuration is particularly preferred.

By performing this step using the coating film forming agent containing the above-described silane coupling agent having a sulfur atom, it becomes possible to form a coating film which is extremely dense and is free of defects and has excellent adhesiveness.

In this step, the above-described silane coupling agent having a sulfur atom is preferably at least partially hydrolyzed, more preferably substantially completely hydrolyzed. Therefore, the coating film forming agent containing a silane coupling agent having a sulfur atom generally contains water to be used for hydrolysis. As for the content of water, water is contained in the coating film forming agent at a concentration of preferably from 1 to 20 mass%, more preferably from 5 to 15 mass% with respect to the total mass of the coating film forming agent. By using the coating film forming agent containing water at the above-described concentration in this step, it becomes possible to allow the hydrolysis of the silane coupling agent having a sulfur atom to proceed stably.

The coating film forming agent to be used in this step may contain a solvent for dissolving the silane coupling agent having a sulfur atom. In general, the silane coupling agent having a sulfur atom is substantially insoluble in water. On the other hand, as described above, the coating film forming agent contains water for hydrolyzing the silane coupling agent having a sulfur atom. Therefore, the solvent is preferably a substantially water-miscible organic solvent, and more preferably a substantially water-miscible aliphatic alcohol, aliphatic glycol, aliphatic ketone, or aliphatic ether. Examples thereof include aliphatic alcohols such as methanol, ethanol, propanol, butanol, and isomers thereof; aliphatic glycols such as ethylene glycol, propylene glycol, and diethylene glycol; aliphatic ketones such as acetone, methyl ethyl ketone, and diethyl ketone; and aliphatic ethers such as dimethyl ether, ethyl methyl ether, diethyl ether, and tetrahydrofuran. The above-described solvents may be used alone or in the form of a mixture. An aliphatic alcohol such as methanol, ethanol, propanol, butanol, or an isomer thereof not only stabilizes the coating film forming agent, but also improves the wettability of the surface of the metal base material, and therefore is particularly preferred. By using the coating film forming agent containing the above-described solvent in this step, it becomes possible to allow the hydrolysis of the silane coupling agent having a sulfur atom to proceed stably and also to form a coating film which is extremely dense and is free of defects and has excellent adhesiveness.

The coating film forming agent to be used in this step has a pH of preferably 7 or less, more preferably in a range of from 2 to 6. If the pH of the coating film forming agent is in the above-described range, the hydrolysis of the silane coupling agent having a sulfur atom is accelerated, and therefore such a pH is preferred. In the case where the pH of the coating film forming agent is not in the above-described range, it is preferred to adjust the pH of the coating film forming agent to fall within the above-described range by adding a pH adjusting agent thereto. Examples of the pH adjusting agent include, although not limited thereto, hydroxides of alkali metals or alkaline earth metals such as sodium hydroxide and potassium hydroxide, ammonia, acetic acid, formic acid, sulfuric acid, hydrochloric acid, and nitric acid. However, for example, in the case of the coating film forming agent containing bis(3-triethoxysilylpropyl)tetrasulfide, the pH of the coating film forming agent is about 5.2, and therefore, it is preferred to perform this step without adding a pH adjusting agent. By performing this step using the coating film forming agent having a pH in the above-described range, it becomes possible to allow the hydrolysis of the silane coupling agent having a sulfur atom to proceed stably.

In this step, as an embodiment of treating the metal base material with the coating film forming agent, for example, immersion, spraying, and roll-coating can be exemplified, although not limited thereto. It is preferred that the metal base material is immersed in the coating film forming agent.

In this case, the immersion time can vary depending on the concentration of the silane coupling agent having a sulfur atom in the coating film forming agent to be used. For example, in the case where the coating film forming agent contains the above-described silane coupling agent having a sulfur atom at a concentration in a range of from 0.05 to 10 mass% with respect to the total mass of the coating film forming agent, the immersion time is preferably 1 hour or more, more preferably 2 hours or more. The immersion temperature is preferably in a range of from 20 to 30°C. If the immersion time is less than 1 hour, not only is the range of the corrosion current density and/or the pitting potential of the resulting aluminum material having a coating film layer formed thereon substantially the same as that of an aluminum material having no coating film formed thereon, but also pitting corrosion occurs in a few days in a corrosive environment, and therefore, such an immersion time is not preferred. Accordingly, by treating the metal base material with the coating film forming agent under the above-described condition, it becomes possible to obtain a corrosion-proof aluminum material having a high corrosion-proof property.

Alternatively, this step may be performed by an electrolysis treatment in which the metal base material is immersed in the coating film forming agent and polarized to a given potential. For example, in the case where the coating film forming agent contains the above-described silane coupling agent having a sulfur atom at a concentration in a range of from 0.05 to 10 mass% with respect to the total mass of the coating film forming agent, the electrolysis potential is in a range of preferably from -1500 to -1000 mV, more preferably from - 500 to -100 mV with respect to a Ag/AgCl saturated KCl electrode. The electrolysis time is preferably 0.5 hours or more. The electrolysis temperature is preferably in a range of from 25 to 30°C. By performing the electrolysis treatment under the above-described condition, a primer layer composed of an oxide or a hydroxide of the metal base material having a thickness exceeding the thickness of a native oxide of the metal base material can be formed between the metal base material and the coating film layer. Accordingly, it becomes possible to obtain a corrosion-proof aluminum material having a high corrosion-proof property even if the treatment time is shorter than in the case of performing a usual immersion treatment, for example in a range of from 0.5 to 1 hour.

The coating film forming agent to be used in this step may further contain an oxidizing agent. Examples of the oxidizing agent include, although not limited thereto, hydrogen peroxide, permanganic acid, chloric acid, dichromic acid, bromic acid, nitric acid, hypochlorous acid, and salts thereof, peracetic acid, and ozone water, and preferred is hydrogen peroxide. The content of the oxidizing agent in the coating film forming agent is preferably from 5 to 15 mass% with respect to the total mass of the coating film forming agent in the case where the oxidizing agent is hydrogen peroxide, and is preferably from 0.01 to 1.0 mass% with respect to the total mass of the coating film forming agent in the case where the oxidizing agent is another oxidizing agent. By using the coating film forming agent containing the oxidizing agent at a concentration in the above-described range in this step, a primer layer composed of an oxide or a hydroxide of the metal base material having a thickness exceeding the thickness of a native oxide of the metal base material can be formed between the metal base material and the coating film layer. Accordingly, it becomes possible to obtain a corrosion-proof aluminum material having a high corrosion-proof property even if the treatment time is shorter than in the case of performing a usual immersion treatment, for example in a range of from 0.5 to 1 hour.

In this step, it is preferred to dry the metal base material treated with the coating film forming agent at a temperature in a range of from room temperature to 50°C. This drying treatment may be performed by blowing air to the metal base material as needed.

By performing this step under the above-described condition, it becomes possible to obtain a corrosion-proof aluminum material having a high corrosion-proof property.

### 2-2. Thermal Treatment Step

The method of the invention may include a thermal treatment step (Step S2) in which the metal base material having the coating film layer formed thereon is thermally treated.

In this step, the temperature of the thermal treatment of the metal base material having the coating film layer formed thereon is in a range of preferably from 100 to 200°C, more preferably from 100 to 150°C. Further, the time of the thermal treatment is in a range of preferably from 30 minutes to 2 hours, more preferably from 30 minutes to 1 hour.

By performing this step under the above-described condition, it becomes possible to further improve the corrosion-proof property of the corrosion-proof aluminum material.

### EXAMPLES

Hereinafter, the invention will be more specifically described with reference to Examples, however, the technical scope of the invention is not limited to these Examples.

### 1. Test for Evaluating Corrosion-Proof Performance

The corrosion-proof performance of samples prepared in Examples and Comparative Examples was evaluated by the following tests.

### 1-1. Evaluation of Pitting Corrosion Resistance by Electrochemical Test

The surface of each of the samples prepared in Examples and Comparative Examples was covered with a chemical resistant insulating tape except for a one centimeter square area thereof, which was left uncovered with the tape. The sample was connected to a potentiostat (HZ-3000, manufactured by Hokuto Denko Corporation) and immersed in a 3.5 mass% NaCl aqueous solution at 25°C for 10 minutes. Thereafter, at the time when the potential was stabilized, while the sample was immersed in the NaCl aqueous solution, the current density was measured by using a potential which was lower than the immersion potential by 100 mV as a benchmark, and scanning the potential at a scanning rate of 30 mV/min in the anodic direction until pitting corrosion occurred so that the current density suddenly increased. As the NaCl aqueous solution, an air-saturated NaCl aqueous solution was used. After the measurement, in the obtained potential-current curve (polarization curve), according to the Tafel equation, the corrosion current density was determined under the assumption that the logarithm of the current density and the potential are in a linear relationship in a range of from the immersion potential to 70-150 mV. Further, in the polarization curve, a potential at which a current density suddenly increased was determined to be the pitting potential. In general, as the pitting potential increases (to a more noble potential), the pitting corrosion resistance is improved. In this test, a case where the pitting potential was 500 mV or more was evaluated to have favorable pitting corrosion resistance.

### 1-2. Evaluation of Pitting Corrosion Resistance by Immersion Test

Each of the samples prepared in Examples and Comparative Examples was immersed in a 3.5 mass% NaCl aqueous solution at 25°C for 1 to 20 days. Thereafter, the sample was taken out from the NaCl aqueous solution, and the presence or absence of pitting corrosion in the surface of the sample was observed using a light microscope (magnification: 400x, Nikon OPTIPHOT 200). A case where a change could not be observed in comparison with an untreated sample was evaluated as "A", a case where although the occurrence of pitting corrosion could not be observed, a discolored region could be observed was evaluated as "B", and a case where the occurrence of pitting corrosion could be observed was evaluated as "C".

### 2. Effect of Treatment with Silane Coupling Agent Having Sulfur Atom

In this test, an effect of improving the corrosion-proof performance when an aluminum-sputtered film was treated with a coating film forming agent containing a silane coupling agent having a sulfur atom was examined.

### 2-1. Preparation of Sample

For the purpose of improving the adhesion strength, on a polycrystalline silicon wafer, TiO₂ and Ti were sputtered to a thickness of 5000 Å and 250 Å, respectively, and then, aluminum (Al) was sputtered to a thickness of 100 nm, and the resulting material was used as a sample.

The wafer (about 1.5 x 3.5 cm) having an Al film sputtered thereon was immersed in a coating film forming agent composed of a hydrous ethanol solution (containing 10 vol% (30 mass%) water) containing 1 mass% bis(3-triethoxysilylpropyl)tetrasulfide at 25°C for a given period of time. Thereafter, the wafer having an Al film sputtered thereon was taken out and dried by blowing air. After drying, the wafer having an Al film sputtered thereon was thermally treated at 100°C for 1 hour in an air atmosphere, whereby an Al-sputtered film having a coating film layer formed thereon was obtained.

### 2-2. Evaluation of Corrosion-Proof Performance

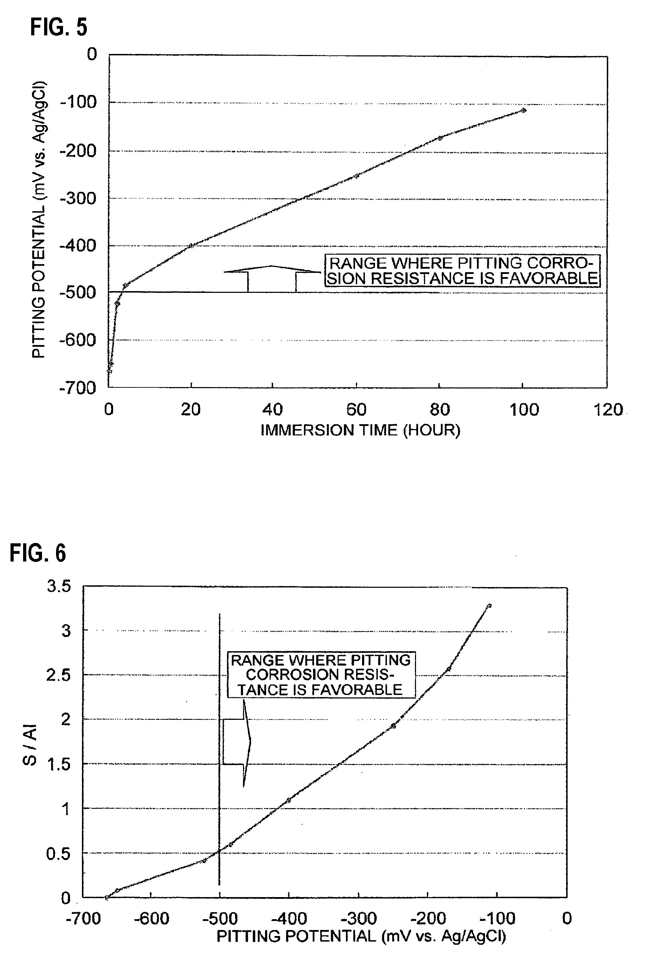

By the electrochemical test described in the above 1-1, the corrosion current density and the pitting potential of the sample of the Al-sputtered film having a coating film layer formed thereon were determined. Further, the composition and the binding state of the coating film layer formed with a silane coupling agent having a sulfur atom were analyzed by X-ray photoelectron spectroscopy (XPS, AXIS-HS, manufactured by Shimadzu Corporation/Kratos Analytical Ltd.) (X-ray source: Al-Ka, tube voltage: 15 kV, tube current: 15 mA). Then, peaks were divided and at the same time, a waveform analysis was performed using a sensitivity coefficient, whereby the ratio of the concentration of S atom to the concentration of Al atom (S/Al (at%)) in the coating film layer was determined. The results are shown in Table 1. Further, the polarization curve of Comparative Example 1 is shown in Fig. 3, the relationship between the immersion time in the coating film forming agent and the corrosion current density (µA/cm²) is shown in Fig. 4, the relationship between the immersion time in the coating film forming agent and the pitting potential (vs. Ag/AgCl saturated KCl) is shown in Fig. 5, and the relationship between the pitting potential and the S/Al ratio is shown in Fig. 6.

**Table 1**

| | Immersion time in coating film forming agent (hour) | Corrosion current density (µA/cm²) | Pitting potential (mV vs. Ag/AgCl) | S/Al (at%) |
|---|---|---|---|---|
| Comparative Example 1 | 0 | 0.0072 | -665 | 0 |
| Comparative Example 2 | 0.5 | < 0.001 | -650 | 0.08 |
| Example 1 | 2.0 | < 0.001 | -523 | 0.42 |
| Example 2 | 4.0 | < 0.001 | -485 | 0.6 |
| Example 3 | 20 | < 0.001 | -400 | 1.0 |
| Example 4 | 60 | < 0.001 | -250 | 1.93 |
| Example 5 | 80 | < 0.001 | -170 | 2.58 |
| Example 6 | 100 | < 0.001 | -112 | 3.30 |

As shown in Table 1 and Fig. 4, in the case of Comparative Example 1 in which the treatment with the coating film forming agent containing a silane coupling agent was not performed, the corrosion current density was 0.0072 µA/cm². On the other hand, in the case of Comparative Example 2 in which the immersion treatment in the coating film forming agent containing a silane coupling agent was performed for 0.5 hours, the corrosion current density was decreased below the detection limit (<0.001 µA/cm²), and the resistance against general corrosion was improved.

The pitting potentials in the case of Comparative Example 1 in which the treatment with the coating film forming agent containing a silane coupling agent was not performed and in the case of Comparative Example 2 in which the immersion treatment in the coating film forming agent was performed for 0.5 hours were -665 mV and -650 mV, respectively, and there was almost no difference between these values. However, in the case of Example 1 in which the immersion treatment in the coating film forming agent was performed for 2 hours, the pitting potential shifted to a more noble potential of -523 mV. Further, it was revealed that as the immersion time in the coating film forming agent was increased, the pitting potential shifted to a more noble potential to improve the pitting corrosion resistance (Examples 2 to 6).

By comparing the measurement result of S/Al ratio in the surface of each of the samples of Comparative Examples and Examples with the above-described results of the pitting potential, it was revealed that also the pitting potential increased as the S/Al ratio increased (Fig. 6).

By the immersion test described in the above 1-2, the pitting corrosion resistance of the Al-sputtered film having a coating film layer formed thereon was evaluated. The results are shown in Table 2.

**Table 2**

| | Immersion time in coating film forming agent (hour) | S/Al (at%) | immersion time in NaCl aqueous solution | | | | |
|---|---|---|---|---|---|---|---|
| | | | 1 day | 2 days | 7 days | 10 days | 20 days |
| Comparative Example 1 | 0 | 0 | C | C | C | C | C |
| Comparative Example 2 | 0.5 | 0.08 | A | B | C | C | C |
| Example 1 | 2.0 | 0.42 | A | A | A | A | B |
| Example 2 | 4.0 | 0.6 | A | A | A | A | A |
| Example 3 | 20 | 1.0 | A | A | A | A | A |
| Example 4 | 60 | 1.93 | A | A | A | A | A |
| Example 5 | 80 | 2.58 | A | A | A | A | A |
| Example 6 | 100 | 3.30 | A | A | A | A | A |

As shown in Table 2, in the case of Comparative example 1 in which the treatment with the coating film forming agent containing a silane coupling agent was not performed, after the sample was immersed in a 3.5 mass% NaCl aqueous solution for 1 day, pitting corrosion occurred. In the case of Comparative Example 2 in which the immersion treatment in the coating film forming agent containing a silane coupling agent was performed for 0.5 hours, pitting corrosion could not be observed after the sample was immersed in the NaCl aqueous solution for 1 day, however, discoloration occurred after the sample was immersed for 2 days, and pitting corrosion occurred after the sample was immersed for 7 days. On the other hand, in the case of Example 1 in which the immersion treatment in the coating film forming agent containing a silane coupling agent was performed for 2 hours, pitting corrosion could not be observed even after the sample was immersed in the NaCl aqueous solution for 10 days, and therefore, it was revealed that high pitting corrosion resistance was obtained.

As shown in Figs. 5 and 6, the ranges where high pitting corrosion resistance is exhibited were such that the pitting potential was -500 mV or more, the immersion time was 2 hours or more, and the S/Al ratio was 0.4 or more.

### 3. Effect of Oxidizing Agent

In this test, an effect of improving corrosion-proof performance when a coating film forming agent containing a silane coupling agent having a sulfur atom further contained an oxidizing agent was examined.

### 3-1. Preparation of Sample

An Al-sputtered film having a coating film layer formed thereon was obtained in the same manner as the procedure described in the above 2-1 except that the coating film forming agent was changed to an ethanol solution containing 1 mass% bis (3-triethoxysilylpropyl)tetrasulfide and 10 mass% of a 30 vol% hydrogen peroxide aqueous solution.

### 3-2. Evaluation of Corrosion-Proof Performance

By the electrochemical test described in the above 1-1, the corrosion current density and the pitting potential of the sample of the Al-sputtered film having a coating film layer formed thereon were determined. Further, the spectrum of the surface of the sample of the Al-sputtered film having a coating film layer formed thereon was measured by X-ray photoelectron spectroscopy (XPS), and the ratio of the concentration of S atom to the concentration of Al atom (S/Al (at%)) in the surface of the sample was determined. The results are shown in Table 3.

**Table 3**

| | Immersion time in coating film forming agent (hour) | Corrosion current density (µA/cm²) | Pitting potential (mV vs. Ag/AgCl) | S/Al (at%) |
|---|---|---|---|---|
| Comparative Example 1 | 0 | 0.0072 | -665 | 0 |
| Comparative Example 2 | 0.5 | < 0.001 | -650 | 0.08 |
| Example 7 | 0.5 | < 0.001 | -420 | 1.32 |
| Example 8 | 2.0 | < 0.001 | -315 | 1.50 |
| Example 9 | 4.0 | < 0.001 | -165 | 2.93 |

As shown in Table 3, it was revealed that by further incorporating the oxidizing agent in the coating film forming agent, even in the case of Example 7 in which the immersion treatment in the coating film forming agent was performed for 0.5 hours, higher corrosion-proof performance (the pitting potential was -500 mV or more and the S/Al ratio was 0.4 or more) was exhibited as compared with the case of Comparative Example 2 in which the immersion treatment was performed for the same period of time.

It is considered that the above-described effect is attributed to a difference in the thickness of the primer layer composed of an oxide of aluminum formed between the Al-sputtered film and the coating film layer. In the case of Comparative Example 1, since the treatment with the coating film forming agent containing a silane coupling agent is not performed, a native oxide layer is formed on the surface of the Al-sputtered film. The thickness of the native oxide layer was measured using SIMS and found to be about 50 Å. On the other hand, as a simulation of Example 7, the thickness of an oxide layer formed on the surface of an Al-sputtered film which was obtained by immersing an Al-sputtered film in an ethanol solution containing 10 mass% of a 30 vol% hydrogen peroxide aqueous solution at 25°C for 0.5 hours was measured and found to be about 100 Å. As a simulation of Example 6, the thickness of an oxide layer formed on the surface of an Al-sputtered film which was obtained by immersing an Al-sputtered film in a hydrous ethanol solution without containing hydrogen peroxide at 25°C for as long as 100 hours was measured and found to be less than 100 Å. From these results, it is considered that in the case of Example 7, the corrosion-proof performance was further improved by forming a primer layer composed of an oxide of aluminum having a thickness exceeding the thickness of a native oxide of the Al-sputtered film between the Al-sputtered film and the coating film layer formed with the silane coupling agent.

### 4. Effect of Electrolysis Treatment

In this test, an effect of improving corrosion-proof performance when the treatment with a coating film forming agent containing a silane coupling agent having a sulfur atom was performed by electrolysis was examined.

### 4-1. Preparation of Sample

An Al-sputtered film having a coating film layer formed thereon was obtained in the same manner as the procedure described in the above 2-1 except that in place of immersion of an Al-sputtered film in a coating film forming agent, an Al-sputtered film was polarized to a given potential for 0.5 hours in the coating film forming agent.

### 4-2. Evaluation of Corrosion-Proof Performance

By the electrochemical test described in the above 1-1, the corrosion current density and the pitting potential of the sample of the Al-sputtered film having a coating film layer formed thereon were determined. Further, the spectrum of the surface of the sample of the Al-sputtered film having a coating film layer formed thereon was measured by X-ray photoelectron spectroscopy (XPS), and the ratio of the concentration of S atom to the concentration of Al atom (S/Al (at%)) in the surface of the sample was determined. The results are shown in Table 4.

**Table 4**

| | Electrolysis potential (mV) (Ag/AgCl saturated KCl) | Corrosion current density (µA/cm²) | Pitting potential (mV vs. Ag/AgCl) | S/Al (at%) |
|---|---|---|---|---|
| Comparative Example 1 | 0 | 0.0072 | -665 | 0 |
| Comparative Example 2 | 0 | < 0.001 | -650 | 0.08 |
| Example 10 | -300 | < 0.001 | -145 | 3.30 |
| Example 11 | -1200 | < 0.001 | -285 | 1.93 |

As shown in Table 4, it was revealed that by changing the treatment with the coating film forming agent from the immersion treatment to the electrolysis treatment, even in the case of Example 10 in which the treatment was performed for 0.5 hours, high corrosion-proof performance (the pitting potential was -500 mV or more and the S/Al ratio was 0.4 or more) was exhibited as compared with the case of Comparative Example 2 in which the immersion treatment was performed for the same period of time.

It is considered that the above-described effect is attributed to a difference in the thickness of the primer layer composed of an oxide or a hydroxide of aluminum formed between the Al-sputtered film and the coating film layer in the same manner as in the case of using the coating film forming agent containing an oxidizing agent. As in the case of Example 10, by performing an electrolysis treatment at -300 mV, aluminum is anodized, and therefore, an oxide is formed on the surface of the Al-sputtered film. On the other hand, as in the case of Example 11, by performing an electrolysis treatment at - 1200 mV, an OH group is generated on the surface of the Al-sputtered film by a cathode reaction to form a hydroxide. Therefore, it is considered that in the case of Examples 10 and 11, the corrosion-proof performance was further improved by forming a primer layer composed of an oxide or a hydroxide of aluminum having a thickness exceeding the thickness of a native oxide of the Al-sputtered film between the Al-sputtered film and the coating film layer formed with the silane coupling agent.

### 5. Effect of Treatment with Various Silane Coupling Agents Having Sulfur Atom

In this test, an effect of improving corrosion-proof performance when the silane coupling agent having a sulfur atom was changed was examined.

### 5-1. Preparation of Sample

An Al-sputtered film having a coating film layer formed thereon was obtained in the same manner as the procedure described in the above 2-1 except that bis(3-triethoxysilylpropyl)tetrasulfide was changed to any of the following silane coupling agents having a sulfur atom.

### 5-2. Evaluation of Corrosion-Proof Performance

By the electrochemical test described in the above 1-1, the corrosion current density and the pitting potential of the sample of the Al-sputtered film having a coating film layer formed thereon were determined. Further, the spectrum of the surface of the sample of the Al-sputtered film having a coating film layer formed thereon was measured by X-ray photoelectron spectroscopy (XPS), and the ratio of the concentration of S atom to the concentration of Al atom (S/Al (at%)) in the surface of the sample was determined. The results are shown in Table 5.

**Table 5**

| | Silane coupling agent having sulfur atom | Immersion time in coating film forming agent (hour) | Corrosion current density (µA/cm²) | Pitting potential (mV vs. Ag/AgCl) | S/Al (at%) |
|---|---|---|---|---|---|
| Comparative Example 1 | - | 0 | 0.0072 | -665 | 0 |
| Example 12 | bis(3-triethoxysilylpropyl)disulfide | 20 | < 0.001 | -350 | 1.63 |
| Example 13 | 3-mercaptopropylmethyldimethoxysilane | 20 | < 0.001 | -280 | 1.82 |
| Example 14 | 3-mercaptopropyltrimethoxysilane | 20 | < 0.001 | -265 | 1.72 |
| Example 15 | 3-propionylthio-1-propyltrimethoxysilane | 20 | < 0.001 | -300 | 1.45 |

As shown in Table 5, it was revealed that even in the case of using any of the silane coupling agents having a sulfur atom, high pitting corrosion resistance was exhibited.

### 6. Effect of Treatment with Mixture of a Plurality of Silane Coupling Agents Having Sulfur Atom

In this test, an effect of improving corrosion-proof performance when a mixture of a plurality of silane coupling agents having a sulfur atom was used was examined.

### 6-1. Preparation of Sample

An Al-sputtered film having a coating film layer formed thereon was obtained in the same manner as the procedure described in the above 2-1 except that bis(3-triethoxysilylpropyl)tetrasulfide was changed to a mixture of a plurality of silane coupling agents having a sulfur atom as shown below. Incidentally, each of the silane coupling agents having a sulfur atom was used at a concentration of 1 mass%.

### 6-2. Evaluation of Corrosion-Proof Performance

By the electrochemical test described in the above 1-1, the corrosion current density and the pitting potential of the sample of the Al-sputtered film having a coating film layer formed thereon were determined. Further, the spectrum of the surface of the sample of the Al-sputtered film having a coating film layer formed thereon was measured by X-ray photoelectron spectroscopy (XPS), and the ratio of the concentration of S atom to the concentration of Al atom (S/Al (at%)) in the surface of the sample was determined. The results are shown in Table 6.

**Table 6**

| | Bifunctional polysulfur silane | Multifunctional mercapto-substituted silane | Immersion time in coating film forming agent (hour) | Corrosion current density (µA/cm²) | Pitting potential (mV vs. Ag/AgCl) | S/A (at%) |
|---|---|---|---|---|---|---|
| Comparative Example 1 | - | - | 0 | 0.0072 | -665 | 0 |
| Example 16 | bis(3-triethoxysilylpropyl)-tetrasulfide | 3-mercaptopropylmethyl-dimethoxysilane | 10 | < 0.001 | -200 | 1.98 |
| Example 17 | bis(3-triethoxysilylpropyl)-tetrasulfide | 3-mercaptopropyltrimethoxysilane | 10 | < 0.001 | -1552 | 2.82 |
| Example 18 | bis(3-triethoxysilylpropyl)-disulfide | 3-mercaptopropyltrimethoxysilane | 10 | < 0.001 | -225 | 2.00 |

As shown in Table 6, it was revealed that even in the case of using a mixture of any of the silane coupling agents having a sulfur atom, high pitting corrosion resistance was exhibited.

### 7. Effect of Corrosion-Proof Treatment of Aluminum Alloy

In this test, an effect of improving corrosion-proof performance when an aluminum alloy was used as the metal base material was examined.

### 7-1. Preparation of Sample

An aluminum alloy base material having a coating film layer formed thereon was obtained in the same manner as the procedure described in the above 2-1 except that the Al-sputtered film was changed to a base material obtained by polishing the surface of any of the following aluminum alloys to a mirror surface.

### 7-2. Evaluation of Corrosion-Proof Performance

By the electrochemical test described in the above 1-1, the corrosion current density and the pitting potential of the sample of the aluminum alloy base material having a coating film layer formed thereon were determined. Further, the spectrum of the surface of the sample of the aluminum alloy base material having a coating film layer formed thereon was measured by X-ray photoelectron spectroscopy (XPS), and the ratio of the concentration of S atom to the concentration of Al atom (S/Al (at%)) in the surface of the sample was determined. The results are shown in Table 7.

**Table 7**

| | Aluminum alloy | Immersion time in coating film forming agent (hour) | Corrosion current density (µA/cm²) | Pitting potential (mV vs. Ag/AgCl) | S/Al (at%) |
|---|---|---|---|---|---|
| Example 19 | 6061-T6 | 20 | < 0.001 | -320 | 1.42 |
| Example 20 | 2024-T3 | 20 | < 0.001 | -350 | 1.20 |
| Example 21 | 5052 | 20 | < 0.001 | -280 | 1.60 |

As shown in Table 7, it was revealed that even in the case of using any of the aluminum alloy base materials, high pitting corrosion resistance was exhibited.

### 8. Comparative Test: Treatment with Silane Coupling Agent Having No Sulfur Atom

In this comparative test, corrosion-proof performance when a silane coupling agent having no sulfur atom was used was examined.

### 8-1. Preparation of Sample

An Al-sputtered film having a coating film layer formed thereon was obtained in the same manner as the procedure described in the above 2-1 except that bis(3-triethoxysilylpropyl)tetrasulfide was changed to bis(triethoxysilylpropylamine). Incidentally, bis(triethoxysilylpropylamine) was used at a concentration of 1 mass%.

### 8-2. Evaluation of Corrosion-Proof Performance

By the electrochemical test described in the above 1-1, the corrosion current density and the pitting potential of the sample of the Al-sputtered film having a coating film layer formed thereon were determined. Further, the spectrum of the surface of the sample of the Al-sputtered film having a coating film layer formed thereon was measured by X-ray photoelectron spectroscopy (XPS), and the ratio of the concentration of N atom to the concentration of Al atom (N/Al (at%)) in the surface of the sample was determined. The results are shown in Table 8.

**Table 8**

| | Immersion time in coating film forming agent (hour) | Corrosion current density (µA/cm²) | Pitting potential (mV vs. Ag/AgCl) | N/Al (at%) |
|---|---|---|---|---|
| Comparative Example 1 | 0 | 0.0072 | -665 | 0 |
| Comparative Example 3 | 0.5 | < 0.001 | -620 | 1.53 |
| Comparative Example 4 | 2.0 | < 0.001 | -670 | 3.3 |
| Comparative Example 5 | 4.0 | < 0.001 | -610 | 4.05 |
| Comparative Example 6 | 20 | < 0.001 | -585 | 3.52 |
| Comparative Example 7 | 60 | < 0.001 | -645 | 2.56 |
| Comparative Example 8 | 80 | < 0.001 | -680 | 2.80 |
| Comparative Example 9 | 100 | < 0.001 | -640 | 3.46 |

As shown in Table 8, from the measurement results of the N/Al ratio in the surface of each sample by XPS, it is found that in the case of Comparative Examples 4 to 9 in which the immersion treatment in the coating film forming agent containing bis(triethoxysilylpropylamine) was performed for 2.0 hours or more, almost no difference was observed in the values of the N/Al ratio, and therefore, it is considered the surfaces of these samples were sufficiently coated with coating films of the silane coupling agent (bis(triethoxysilylpropylamine)).

The corrosion current density was decreased below the detection limit (<0.001 µA/cm²) in the case of Comparative Example 3 in which the immersion treatment in the coating film forming agent containing bis(triethoxysilylpropylamine) was performed for 0.5 hours. However, the pitting potential did not shift to a more noble potential even in the case of Comparative Example 9 in which the immersion treatment in the coating film forming agent was performed for 100 hours, and the pitting corrosion resistance was not improved. Also in the case of using another silane coupling agent having no sulfur atom such as vinyltrimethoxysilane, 3-aminopropyltrimethoxysilane, or 3-isocyanatepropyltriethoxysilane, in the same manner as in the case of using bis (triethoxypropylamine), the general corrosion resistance was improved, but the pitting corrosion resistance was not improved.

Note that the invention is not limited to the above-described embodiments, but includes various modifications. For example, the above-described embodiments have been described in detail so as to assist the understanding of the present invention, and the invention is not always limited to embodiments having all the described constituent elements. Further, regarding a part of constituent elements of each embodiment, it is possible to perform addition, deletion, and/or replacement using other constituent elements.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

The following non-limiting description of embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

Figures 2 to 6 show further possible embodiments of the invention. In order to avoid repetitions, the following description focuses on differences to the embodiment of Figure 1 and the reader is referred to the description of Figure 1 for features which are similar or identical. In order to highlight the common function or concept, the same or similar reference numbers are employed for features having identical or very similar functions.

## Claims

1. A corrosion-proof aluminum material, comprising:
a metal base material composed of aluminum or an aluminum alloy; and
a coating film layer formed with a silane coupling agent having a sulfur atom and disposed on a surface of the metal base material, wherein
the ratio of the concentration of sulfur atom in the surface of the coating film layer to the concentration of aluminum atom is 0.4 or more.

2. The corrosion-proof aluminum material according to claim 1, wherein the material has a pitting potential in a 3.5 mass% NaCl aqueous solution of -500 mV or more versus a silver-silver chloride electrode (saturated KCl).

3. The corrosion-proof aluminum material according to claim 1, wherein a primer layer composed of an oxide or a hydroxide of the metal base material having a thickness exceeding the thickness of a native oxide of the metal base material is further provided between the metal base material and the coating film layer.

4. The corrosion-proof aluminum material according to claim 1, wherein a primer layer composed of an oxide or a hydroxide of the metal base material having a thickness of 80 Å or more is further provided between the metal base material and the coating film layer.

5. A method for producing a corrosion-proof aluminum material which includes a metal base material composed of aluminum or an aluminum alloy, and a coating film layer formed with a silane coupling agent having a sulfur atom and disposed on a surface of the metal base material, comprising:
a coating film layer forming step in which the metal base material is treated with a coating film forming agent containing a silane coupling agent having a sulfur atom to form a coating film layer on a surface of the metal base material, wherein
the ratio of the concentration of sulfur atom in the surface of the coating film layer formed in the coating film layer forming step to the concentration of aluminum atom is 0.4 or more.

6. The method for producing a corrosion-proof aluminum material according to claim 5, wherein the coating film forming agent further contains an oxidizing agent.

7. The method for producing a corrosion-proof aluminum material according to claim 5, wherein the silane coupling agent having a sulfur atom is selected from the group consisting of at least one type of bifunctional polysulfur silane represented by the formula I: 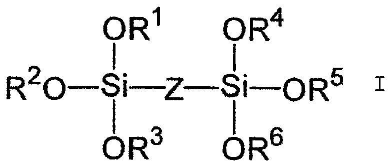 wherein R¹ to R⁶ each independently represent a group selected from the group consisting of alkyl and acetyl; Z represents -Sₓ-or -Q¹-Sₓ-Q²-; Q¹ and Q² each independently represent a group selected from the group consisting of a divalent aliphatic group and an aromatic group; x represents an integer of 2 to 9, at least one type of multifunctional mercapto-substituted silane represented by the formula II: 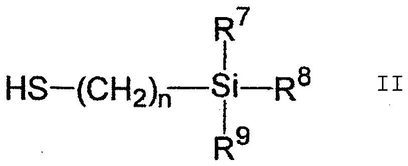 wherein R⁷ represents alkoxy; R⁸ and R⁹ each independently represent hydrogen or a group selected from the group consisting of alkyl and alkoxy; and n represents an integer of 0 to 10, and at least one type of thioester compound represented by the formula III: 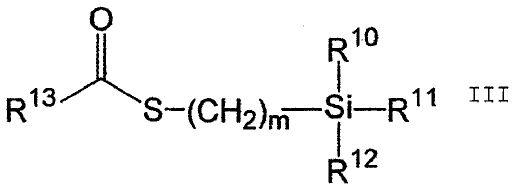 wherein R¹⁰ represents alkoxy; R¹¹ and R¹² each independently represent hydrogen or a group selected from the group consisting of alkyl and alkoxy; R¹³ represents alkyl; and m represents an integer of 0 to 10, and a mixture thereof.

8. The method for producing a corrosion-proof aluminum material according to claim 7, wherein the silane coupling agent having a sulfur atom is at least one type of bifunctional polysulfur silane selected from the group consisting of
bis(3-triethoxysilylpropyl)tetrasulfide,
bis(3-triethoxysilylpropyl)disulfide,
bis(2-triethoxysilylethyl)tetrasulfide,
bis(4-triethoxysilylbutyl)disulfide,
bis(3-trimethoxysilylpropyl)tetrasulfide, and
bis(2-trimethoxysilylethyl)disulfide, and
a mixture thereof.

9. The method for producing a corrosion-proof aluminum material according to claim 7, wherein the silane coupling agent having a sulfur atom is at least one type of multifunctional mercapto-substituted silane selected from the group consisting of
3-mercaptopropyltrimethoxysilane,
3-mercaptopropyltriethoxysilane,
3-mercaptopropylmethyldimethoxysilane, and
2-mercaptoethyltriethoxysilane, and a mixture thereof.

10. The method for producing a corrosion-proof aluminum material according to claim 7, wherein the silane coupling agent having a sulfur atom is a mixture of the bifunctional polysulfur silane and the multifunctional mercapto-substituted silane.

## Patentansprüche

1. Korrosionsfestes Aluminiummaterial, das aufweist:
ein Metallgrundmaterial, das aus Aluminium oder einer Aluminiumlegierung zusammengesetzt ist; und
einen Beschichtungsfilm, der mit einem ein Schwefelatom aufweisenden Silankopplungsmittel gebildet ist und auf eine Oberfläche des Metallgrundmaterials aufgebracht ist, wobei das Verhältnis der Schwefelatomkonzentration in der Oberfläche des Beschichtungsfilms zur Aluminumatomkonzentration 0,4 oder mehr beträgt.

2. Korrosionsfestes Aluminiummaterial nach Anspruch 1, wobei das Material gegenüber einer Silber-Silberchlorid-Elektrode (gesättigtes KCl) in einer wässrigen NaCl-Lösung von 3,5 Gew.-% ein Lochkorrosionspotential von -500 mV oder mehr aufweist.

3. Korrosionsfestes Aluminiummaterial nach Anspruch 1, wobei ferner eine Primerschicht eines Oxids oder Hydroxids des Metallgrundmaterials mit einer Dicke, die die Dicke eines natürlichen Oxids des Metallgrundmaterials übersteigt, zwischen dem Metallgrundmaterial und dem Beschichtungsfilm vorhanden ist.

4. Korrosionsfestes Aluminiummaterial nach Anspruch 1, wobei ferner eine Primerschicht eines Oxids oder Hydroxids des Metallgrundmaterials mit einer Dicke von 80 Å oder mehr zwischen dem Metallgrundmaterial und dem Beschichtungsfilm vorhanden ist.

5. Verfahren zur Herstellung eines korrosionsfesten Aluminiummaterials, das ein Metallgrundmaterial, das aus Aluminium oder einer Aluminiumlegierung zusammengesetzt ist, und einen Beschichtungsfilm umfasst, der mit einem ein Schwefelatom aufweisenden Silankopplungsmittel gebildet ist und auf eine Oberfläche des Metallgrundmaterials aufgebracht ist, wobei das Verfahren umfasst:
einen Schritt zur Ausbildung des Beschichtungsfilms, bei dem das Metallgrundmaterial mit einem Mittel zur Bildung des Beschichtungsfilms behandelt wird, das ein ein Schwefelatom aufweisendes Silankopplungsmittel umfasst, um auf einer Oberfläche des Metallgrundmaterials einen Beschichtungsfilm zu bilden,
wobei das Verhältnis der Schwefelatomkonzentration in der Oberfläche des Beschichtungsfilms zur Aluminumatomkonzentration 0,4 oder mehr beträgt.

6. Verfahren zur Herstellung eines korrosionsfesten Aluminiummaterials nach Anspruch 5, wobei das Mittel zur Bildung des Beschichtungsfilms ferner ein Oxidationsmittel enthält.

7. Verfahren zur Herstellung eines korrosionsfesten Aluminiummaterials nach Anspruch 5, wobei das ein Schwefelatom aufweisende Silankopplungsmittel ausgewählt ist unter:
zumindest einem Typ eines bifunktionellen Polyschwefelsilans der Formel I 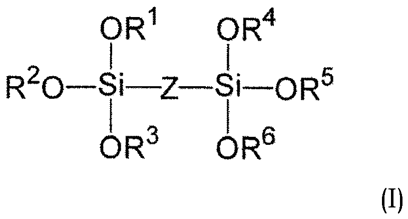
worin R¹ bis R⁶ jeweils unabhängig voneinander eine Gruppe bedeuten, die unter Alkyl und Acetyl ausgewählt ist; Z -Sₓ- oder -Q¹-Sₓ-Q²- bedeutet; Q¹ und Q² jeweils unabhängig voneinander eine Gruppe bedeuten, die unter einer zweiwertigen aliphatischen Gruppe und einer aromatischen Gruppe ausgewählt ist; und x eine ganze Zahl von 2 bis 9 ist;
zumindest einem Typ eines multifunktionellen Mercapto-substituierten Silans der Formel II: 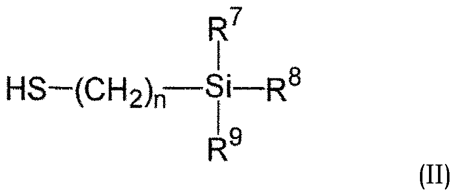 worin R⁷ Alkoxy bedeutet; R⁸ und R⁹ jeweils unabhängig voneinander Wasserstoff oder eine Gruppe bedeuten, die unter Alkyl und Alkoxy ausgewählt ist; und n eine ganze Zahl von 0 bis 10 ist; und
zumindest einem Typ eines Thioesters der Formel III: 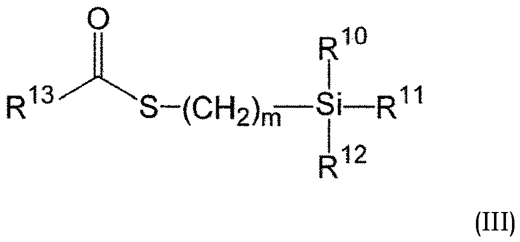
worin R¹⁰ Alkoxy bedeutet; R¹¹ und R¹² jeweils unabhängig voneinander Wasserstoff oder eine Gruppe bedeuten, die unter Alkyl und Alkoxy ausgewählt ist; R¹³ Alkyl bedeutet; und m eine ganze Zahl von 0 bis 10 ist;
und deren Gemischen.

8. Verfahren zur Herstellung eines korrosionsfesten Aluminiummaterials nach Anspruch 7, wobei das ein Schwefelatom aufweisende Silankopplungsmittel zumindest ein Typ eines bifunktionellen Polyschwefelsilans ist, der ausgewählt ist unter:
Bis(3-triethoxysilylpropyl)tetrasulfid,
Bis(3-triethoxysilylpropyl)disulfid,
Bis(2-triethoxysilylethyl)tetrasulfid,
Bis(4-triethoxysilylbutyl)disulfid,
Bis(3-trimethoxysilylpropyl)tetrasulfid,
Bis(2-trimethoxysilylethyl)disulfid
und deren Gemischen.

9. Verfahren zur Herstellung eines korrosionsfesten Aluminiummaterials nach Anspruch 7, wobei das ein Schwefelatom aufweisende Silankopplungsmittel zumindest ein Typ eines multifunktionellen Mercapto-substituierten Silans ist, der ausgewählt ist unter:
3-Mercaptopropyltrimethoxysilan,
3-Mercaptopropyltriethoxysilan,
3-Mercaptopropylmethyldimethoxysilan,
2-Mercaptoethyltriethoxysilan
und deren Gemischen.

10. Verfahren zur Herstellung eines korrosionsfesten Aluminiummaterials nach Anspruch 7, wobei das ein Schwefelatom aufweisende Silankopplungsmittel ein Gemisch aus einem bifunktionellen Polyschwefelsilan und einem multifunktionellen Mercapto-substituierten Silan ist.

## Revendications

1. Matériau d'aluminium anticorrosion, comprenant :
un matériau de base métallique composé d'aluminium ou d'un alliage d'aluminium ; et
une couche de film de revêtement formée d'un agent de couplage au silane ayant un atome de soufre et déposée à la surface du matériau de base métallique, dans lequel
le rapport de la concentration en atome de soufre dans la surface de la couche de film de revêtement sur la concentration en atome d'aluminium est de 0,4 ou plus.

2. Matériau d'aluminium anticorrosion selon la revendication 1, dans lequel le matériau a un potentiel de rupture dans une solution aqueuse de NaCl à 3,5 % en masse de -500 mV ou plus par rapport à une électrode à l'argent-chlorure d'argent (saturée en KCl).

3. Matériau d'aluminium anticorrosion selon la revendication 1, dans lequel une couche d'apprêt composée d'un oxyde ou d'un hydroxyde du matériau de base métallique ayant une épaisseur excédant l'épaisseur d'un oxyde natif du matériau de base métallique est en outre prévue entre le matériau de base métallique et la couche de film de revêtement.

4. Matériau d'aluminium anticorrosion selon la revendication 1, dans lequel une couche d'apprêt composée d'un oxyde ou d'un hydroxyde du matériau de base métallique ayant une épaisseur de 80 Å ou plus est en outre prévue entre le matériau de base métallique et la couche de film de revêtement.

5. Procédé de production d'un matériau d'aluminium anticorrosion qui comprend un matériau de base métallique composé d'aluminium ou d'un alliage d'aluminium, et une couche de film de revêtement formée d'un agent de couplage au silane ayant un atome de soufre et disposée à la surface du matériau de base métallique, comprenant :
une étape de formation d'une couche de film de revêtement dans laquelle le matériau de base métallique est traité avec un agent formant un film de revêtement comprenant un agent de couplage au silane ayant un atome de soufre pour former une couche de film de revêtement à la surface du matériau de base métallique, dans lequel
le rapport de la concentration en atome de soufre dans la surface de la couche de film de revêtement formée lors de l'étape de formation de couche de film de revêtement sur la concentration en atome d'aluminium est de 0,4 ou plus.

6. Procédé de production d'un matériau d'aluminium anticorrosion selon la revendication 5, dans lequel l'agent de formation de film de revêtement comprend en outre un agent oxydant.

7. Procédé de production d'un matériau d'aluminium anticorrosion selon la revendication 5, dans lequel l'agent de couplage au silane ayant un atome de soufre est choisi dans le groupe consistant en au moins un type de silane de polysoufre bifonctionnel représenté par la formule I : 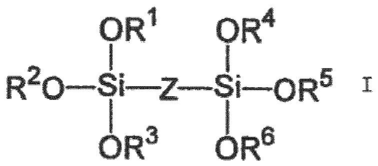 dans laquelle R¹ à R⁶ représentent chacun indépendamment un groupe choisi dans le groupe consistant en alkyle et acétyle ; Z représente -Sₓ- ou -Q¹-Sₓ-Q² ; Q¹ et Q² représentent chacun indépendamment un groupe choisi dans le groupe consistant en un groupe aliphatique divalent et un groupe aromatique ; x représente un entier de 2 à 9, au moins un type de silane substitué par mercapto multifonctionnel représenté par la formule II : 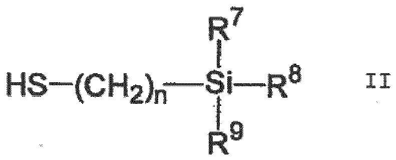 dans laquelle R⁷ représente un alcoxy ; R⁸ et R⁹ représentent chacun indépendamment un hydrogène ou un groupe choisi dans le groupe consistant en alkyle et alcoxy ; et n représente un entier de 0 à 10, et au moins un type de composé thioester représenté par la formule III : 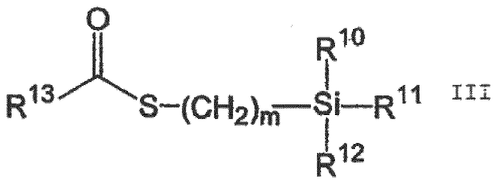 dans laquelle R¹⁰ représentent un alcoxy ; R¹¹ et R¹² représentent chacun indépendamment un hydrogène ou un groupe choisi dans le groupe consistant en alkyle et alcoxy ; R¹³ représente un alkyle ; et m représente un entier de 0 à 10, et un mélange de ceux-ci.

8. Procédé de production d'un matériau d'aluminium anticorrosion selon la revendication 7, dans lequel l'agent de couplage au silane ayant un atome de soufre est au moins un type de silane de polysoufre bifonctionnel choisi dans le groupe consistant en
bis (3-triéthoxysilylpropyl)tétrasulfure,
bis (3-triéthoxysilylpropyl)disulfure,
bis (2-triéthoxysilyléthyl)tétrasulfure,
bis (4-triéthoxysilylbutyl)disulfure,
bis (3-triméthoxysilylpropyl)tétrasulfure, et
bis (2-triméthoxysilyléthyl)disulfure, et
un mélange de ceux-ci.

9. Procédé de production d'un matériau d'aluminium anticorrosion selon la revendication 7, dans lequel l'agent de couplage au silane ayant un atome de soufre est au moins un type de silane substitué par mercapto multifonctionnel choisi dans le groupe consistant en
3-mercaptopropyltriméthoxysilane,
3-mercaptopropyltriéthoxysilane,
3-mercaptopropylméthyldiméthoxysilane, et
2-mercaptoéthyltriéthoxysilane, et un mélange de ceux-ci.

10. Procédé de production d'un matériau d'aluminium anticorrosion selon la revendication 7, dans lequel l'agent de couplage au silane ayant un atome de soufre est un mélange du silane de polysoufre bifonctionnel et du silane substitué par mercapto multifonctionnel.
